# EUROPEAN PATENT SPECIFICATION

(11) **EP 2 456 319 B1**
(45) Date of publication and mention of the grant of the patent: **12.04.2017**
(21) Application number: 10738017.2
(22) Date of filing: 23.07.2010
(51) Int. Cl.: A23G 1/00, A23G 3/36, A23G 1/32, A23G 1/40

(54) **METHOD FOR PRODUCING TEMPERATURE TOLERANT CONFECTIONERY COMPOSITIONS AND COMPOSITIONS PRODUCED USING THE METHOD**
VERFAHREN ZUR HERSTELLUNG TEMPERATURTOLERANTER KONFEKTZUSAMMENSETZUNGEN UND AUF DIESE WEISE HERSTELLTE ZUSAMMENSETZUNGEN
PROCÉDÉ POUR LA PRODUCTION DE COMPOSITIONS DE CONFISERIE TOLÉRANTES À LA TEMPÉRATURE ET COMPOSITIONS PRODUITES À L'AIDE DU PROCÉDÉ

(30) Priority: 23.07.2009 GB 0912833
(43) Date of publication of application: 30.05.2012
(73) Proprietor: Cadbury UK Limited, Birmingham B30 2LU (GB)
(72) Inventor: DHAMI, Rajesh, Middlesex UB8 1 DH (GB); O'DONNELL, Kay, Middlesex UB8 1 DH (GB); HARRIS, Lawrence, Middlesex UB8 1 DH (GB); TAU, Elizabeth, Middlesex UB8 1 DH (GB)
(74) Representative: Ward, David Ian
(86) International application number: PCT/GB2010/001396
(87) International publication number: WO 2011/010105

(56) References cited:
- EP-A1- 0 688 506
- EP-A1- 1 673 977
- EP-A2- 0 393 327
- EP-A2- 0 835 612
- WO-A1-93/06737
- GB-A- 904 197
- JP-A- S5 948 049
- JP-A- 2004 350 572
- US-A- 4 664 927
- US-A- 5 149 560
- DATABASE WPI Week 198417 Thomson Scientific, London, GB; AN 1984-104766 XP002608912 & JP 59 048049 A (NISSHIN KAKO KK) 19 March 1984 (1984-03-19)
- DATABASE GNPD [Online] MINTEL February 2009 RUSSEL STOVER CANDIES: 'Assorted Chocolates' Database accession no. 1053020
- DATABASE GNPD [Online] MINTEL August 2007 ARCOR: 'Chocolate Egg' Database accession no. 759754
- DATABASE GNPD [Online] MINTEL November 2007 LAND'S END: 'English Butter Toffee' Database accession no. 819386

## Description

The present invention relates to a method for producing a temperature tolerant confectionery composition. The invention is particularly but not exclusively concerned with chocolate manufacture.

The pleasurable organoleptic properties of conventional chocolate are, to a significant extent, due to the fact that the fat (primarily cocoa butter) which forms the continuous phase in chocolate melts quickly and smoothly in the mouth giving a characteristic mouthfeel. This is because cocoa butter softens at approximately 28°C and is generally completely melted at 32 to 35°C. However, such melting presents problems for storage and distribution in regions where ambient temperatures are high (e.g. 30 to 40°C).

As a result, much research effort has been directed towards the production of so-called temperature tolerant (or heat resistant) chocolate products. One approach is to replace the cocoa butter partially or completely with higher melting fats. Although such an approach does yield products which maintain their shape at relatively high temperatures, the higher melting fats melt less readily when eaten and leave an undesirable waxy mouthfeel. A second approach is to develop a lattice of sugar particles in the chocolate product which remains rigid when the fat starts to melt. Such a lattice of sugar particles may be developed by the addition of water, glycerol or polyols to a chocolate mixture, with most attention being focussed on the addition of water, including addition of water by means of water-in-oil emulsions. The resulting chocolate often has a gritty texture and there are processing difficulties due to a large increase in viscosity. Methods for improving the heat-resistance of chocolate-based confectionery products comprising mixing a polyol with the chocolate ingredients is already known from for example US 4,664,927 or EP 0 688 506.

It is an object of the present invention in one aspect to provide an improved method for the production of a temperature tolerant confectionery composition.

According to the present invention, there is provided a method for producing a temperature tolerant confectionery composition comprising:-
mixing a liquid comprising water as a first liquid component and a second liquid componentinto a molten confectionery composition comprising a bulk sweetener and fat to obtain a liquid-containing confectionery composition;
shaping the liquid-containing confectionery composition to produce a shaped confectionery composition;
storing the shaped confectionery composition an an elevated temperature of from 40 to 60C for from 2 to 120 hours; and
setting the liquid-containing confectionery composition,
whereby to produce said temperature tolerant confectionery composition,
wherein the liquid constitutes from 1.0 to 2.0wt% of the liquid-containing confectionery composition;
and wherein the ratio of water to the second liquid component is at least 50wt%: no more than 50wt% second liquid component,
and wherein the second liquid component is propylene glycol.

It is proposed that the second liquid component assists in delivery and dispersion of the water throughout the confectionery composition. This allows a temperature tolerant confectionery composition to be obtained using smaller quantities of water than previously. The mechanism is thought to involve a first step of water dissolving some of the bulk sweetener that is dispersed in the fat phase. Secondly, the microenvironment around the sweetener creates a super-saturated solution. It is not clearly understood whether the resulting super-saturated solution results in recrystallisation or the formation of amorphous structures. However, the resulting change in structure causes the formation of a temperature resistant lattice of sweetener within the confectionery. The addition of water can have adverse effects on processing due to an increase in viscosity, on the texture of the resulting composition and also on the flavour profile so it is advantageous to reduce the quantity of water whilst maintaining temperature tolerant functionality.
As used herein "temperature tolerant" in relation to a confectionery composition may mean that the composition retains its shape when exposed to elevated temperature (e.g. at least 40°C).

Alternatively a composition may be regarded as "temperature tolerant" if the peak load measured for the composition by a Stable Micro Systems TA.XT+ texture analyser is more than 500g, 1000g, 1500g or 2000g under the conditions defined hereinafter. Measurements using the TA.XT+ texture analyser are made by incubating the compositions (presented as 12mm deep moulded formats) at 40°C for 3 hours prior to analysis. Using a 12.8mm wide cylindrical probe, the texture analyser is programmed to penetrate the composition at a rate of 10mm/s recording the resistive force as a function of distance until a penetrative distance of 3mm is achieved. Conventional chocolate recipes give values of approximately 5 - 100 g.

The liquid mixed into the molten confectionery composition constitutes from 1.0 to 2.0 wt% of the liquid-containing confectionery composition. It will be understood that wt% values are given relative to the total mass of the molten confectionery composition and the liquid i.e. after mixing. However, given the small quantities involved, wt% values will be similar whether based on the liquid-containing confectionery composition or the initial molten confectionery composition (prior to liquid addition).
The liquid comprises water (the first liquid component) and the second liquid component. The ratio of the water to the second liquid component is at least 50wt% water: no more than 50wt% second liquid component. As discussed above, the inventors propose that the second liquid component is acting to deliver and disperse the water rather than conferring temperature tolerance itself.
In one series of embodiments, the ratio of the water to the second liquid component is at least 55wt% water: no more than 45wt% second liquid component, at least 60wt% water: no more than 40wt% second liquid component, at least 65wt% water: no more than 35wt% second liquid component, at least 70wt% water: no more than 30wt% second liquid component, at least 75wt% water: no more than 25wt% second liquid component, at least 80wt% water: no more than 20wt% second liquid component or at least 85wt% water: no more than 15wt% second liquid component. In a particular embodiment the ratio of the water to the second liquid component is from 75 to 85wt% water: from 15 to 25wt% second liquid component; particularly temperature tolerant compositions are achieved using such ratios.

In one series of embodiments the water that is mixed with the molten confectionery composition constitutes at least 0.6wt%, 0.8wt%, 1.0wt%, 1.2wt%, 1.4wt% or 1.5wt%of the liquid-containing confectionery composition. In another series of embodiments water that is mixed with the molten confectionery composition constitutes no more than 1.5wt% or 1.0wt% of the liquid-containing confectionery composition. In a particular embodiment water constitutes from 0.8 to 1.5wt% of the liquid-containing confectionery composition.

In one series of embodiments the second liquid component that is mixed with the molten confectionery composition constitutes at least 0.1wt%, 0.2wt%, 0.3wt%, 0.4wt%, 0.5wt%, 0.6wt% or 0.8wt% of the liquid-containing confectionery composition. In another series of embodiments the second liquid component that is mixed with the molten confectionery composition constitutes no more than 1.0wt%, 0.6wt%, 0.4wt%, 0.3wt%, 0.2wt% or 0.1wt% of the liquid-containing confectionery composition. In a particular embodiment the second liquid component constitutes from 0.2 to 0.3wt% of the liquid-containing confectionery composition.

In one series of embodiments the water constitutes at least 50wt%, 55wt%, 60wt%, 65wt%, 70wt%, 75wt%, 80wt% or 85wt% of the liquid. In another series of embodiments the water constitutes no more than 90wt%, 85wt%, 80wt%, 75wt%, 70wt%, 65wt%, 60wt% or 55wt% of the liquid. In a particular embodiment the water constitutes from 70 to 85wt% of the liquid.

In one series of embodiments the second liquid component constitutes at least 5wt%, 10wt%, 15wt%, 20wt%, 25wt%, 30wt%, 35wt%, 40wt% or 45wt% of the liquid. In another series of embodiments the second liquid component constitutes no more than 50wt%, 45wt%, 40wt%, 35wt%, 30wt%, 25wt%, 20wt%, 15wt%, 10wt% or 5wt% of the liquid. In a particular embodiment the second liquid component constitutes from 15 to 30wt% of the liquid.

The liquid (comprising water and the second liquid component) is mixed into a molten confectionery composition to yield a liquid-containing confectionery composition. In a particular embodiment, the confectionery composition is a chocolate composition. In such an embodiment the molten chocolate composition may be obtained by melting a solid chocolate composition or by preparing the molten chocolate composition from chocolate ingredients (e.g. sugar, cocoa mass, cocoa butter, milk solids etc.). In a particular embodiment, the method comprises an additional step of melting a solid chocolate composition to obtain the molten chocolate composition prior to mixing with the liquid. Tempering increases the viscosity of the molten chocolate composition and may hinder mixing of the liquid into the molten chocolate composition. Therefore, in a particular embodiment, the molten chocolate composition is not tempered between melting and the addition of the liquid.

Setting is conveniently achieved by cooling. Such cooling may merely involve removing a heat source from the liquid-containing confectionery composition such that it is stored at ambient temperature, or it may be forced by exposing the liquid-containing confectionery composition to below-ambient temperatures (i.e. refrigeration). In one embodiment, setting is achieved by storing the liquid-containing confectionery composition at from 2 to 6°C for from 20 to 60 minutes.
The method comprises an additional step prior to setting of shaping the liquid-containing confectionery composition to produce a shaped confectionery composition. In a particular embodiment, the shaping comprises depositing the liquid-containing confectionery composition into a mould.
The method comprises an additional step of storing the shaped confectionery composition at elevated temperature. The inventors have discovered that such storing (also described as stoving) further improves the temperature tolerance of the composition. The inventors propose that the elevated temperature increases dissolution of the bulk sweetener. The elevated temperature may also cause some of the water to evaporate thereby promoting further structural changes improving the structure of the sweetener lattice.

The shaped confectionery composition is stored at elevated temperature for from 2 to 120 hours. In one series of embodiments, the shaped confectionery composition is stored at elevated temperature for at least 2, 6, 12, 16, 20, 24, 48, 72 or 96 hours. In another series of embodiments, the shaped confectionery composition is stored at elevated temperature for less than 120, 96, 72, 48, 30, 25, 20, 15, 10, 5 or 3 hours. In a particular embodiment the shaped confectionery composition is stored at elevated temperature for from 2 to 24 hours.
The elevated temperature is from 40 to 60°C. In one series of embodiments the elevated temperature is at least 40°C, 45°C, 50°C or at least 55°C. In another series of embodiments the elevated temperature is no more than 60°C, 55° or 50°C.

The storing of the shaped confectionery composition at elevated temperature may take place before the shaped confectionery composition has set, whilst it is partially set or after it has set. In one embodiment, the liquid-containing confectionery composition is shaped and immediately stored at elevated temperature. In an alternative embodiment, the liquid-containing confectionery composition is shaped, stored at reduced temperature (e.g. refrigerated for 20 to 60 minutes) and then stored at elevated temperature.

In a further embodiment, the method comprises storing the shaped confectionery composition at elevated temperature and then storing the shaped confectionery composition at reduced temperature. In one series of embodiments, the shaped confectionery composition is stored at elevated temperature for a period and then stored at reduced temperature for at least 15minutes, 30 minutes, 45 minutes or 1 hour. In another series of embodiments, the shaped confectionery composition is stored at elevated temperature for a period and then stored at reduced temperature for no more than 6 hours, 4 hours, 2 hours, 1 hour or 45 minutes. In a particular embodiment, the shaped confectionery composition is stored at elevated temperature for 2 to 24 hours and then stored at reduced temperature for 30 to 45 minutes.

In one series of embodiments the reduced temperature is no more than 10°C, 8°C, 6°C, 4°C or 2°C. In another series of embodiments the reduced temperature is at least 0°C, 1°C, 2°C or at least 3°C. In a particular embodiment the reduced temperature is from 3 to 6°C.

In one embodiment, the liquid is at room temperature when it is mixed with the molten confectionery composition; the liquid has a temperature of from 20 to 25°C. In an alternative series of embodiments, the liquid has a temperature of at least 30°C, 40°C, 50°C or 60°C when it is mixed with the molten confectionery composition. The increased temperature of the liquid may encourage dissolution of the bulk sweetener and thereby improve the resulting lattice. In one embodiment, the method comprises an additional step of heating the liquid to least 30°C, 40°C, 50°C or 60°C prior to mixing with the molten confectionery composition.

In one embodiment the method comprises an additional step of storing the shaped confectionery composition at reduced pressure. Reduced pressure is considered to provide a good environment for the restructuring of the bulk sweetener.

In one series of embodiments, the shaped confectionery composition is stored at reduced pressure for at least 30 minutes, at least 1 hour or at least 2 hours. In another series of embodiments, the shaped confectionery composition is stored at reduced pressure for no more than 6 hours, no more than 4 hours, no more than 2 hours or no more than 1 hour. In a particular embodiment the shaped confectionery composition is stored at reduced pressure for from 30 minutes to 2 hours.

In one embodiment the reduced pressure is from 1 to 25kPa, from 2 to 20kPa or from 5 to 15kPa.

In one embodiment, the method comprises an additional step of dissolving bulk sweetener in the liquid prior to mixing with the molten confectionery composition. The inventors propose that the bulk sweetener then reforms in the confectionery composition to form a lattice. In a particular embodiment, the method comprises an additional step of dissolving bulk sweetener in the liquid at from 50 to 70°C prior to mixing with the molten confectionery composition.

In one embodiment, the method comprises an additional step of mixing a seeding agent into the molten confectionery composition (before addition of the liquid) or into the liquid-containing confectionery composition (after addition of the liquid). The seeding agent is considered to encourage recrystallisation of the sweetener and formation of the sweetener lattice. Suitable seeding agents include particles of sweetener, such as sugar particles, and fibres.

In one embodiment the sweetener particles are icing sugar, granulated sugar or candy floss. The sweetener particles may have a small particle size (e.g. icing sugar) or large particle size (e.g. granulated sugar or candy floss). The inventors propose that the small particles provide sites for the propagation of crystals whereas larger particles provide long-range structure. In a particular embodiment, the method comprises an additional step of mixing sweetener particles having a small particle size and sweetener particles having a large particle size into the molten confectionery composition.

In one series of embodiments the seeding agent constitutes from 1 to 40wt%, from 2 to 35wt%, from 5 to 30wt%, from 10 to 25wt% or from 15 to 20wt% of the molten confectionery composition or the liquid-containing molten confectionery composition.
In a particular embodiment where the seeding agent is icing sugar or granulated sugar, the seeding agent constitutes from 15 to 25wt% of the molten confectionery composition or the liquid-containing confectionery composition. In a particular embodiment where the seeding agent is dietary fibre, the seeding agent constitutes from 5 to 15wt% of the molten confectionery composition or the liquid-containing confectionery composition.
In one embodiment the sweetener particles having a small particle size have an average particle size of less than 250µm, less than 200µm, less than 150µm or less than 100µm. In one embodiment the sweetener particles having a large particle size have an average particle size of greater than 400µm, greater than 600µm, 800µm or 1000µm.

In one embodiment, the fibre is a dietary fibre. In a further embodiment the dietary fibre is selected from one or more of wheat fibre, potato fibre, oat fibre, corn fibre, apple fibre and pea fibre. In a particular embodiment, the dietary fibre is wheat fibre or potato fibre. In a further embodiment the method comprises an additional step of mixing wheat fibre or potato fibre into the molten confectionery composition. The inventors propose that the fibres provide long-range structure for the sweetener lattice.
In a particular embodiment of the invention where the seeding agent is fibre, there is provided a method for producing a temperature tolerant confectionery composition comprising:-
mixing a liquid comprising water as a first liquid component and a second liquid component, said second liquid component into a molten confectionery composition comprising a bulk sweetener and fat to obtain a liquid-containing confectionery composition;
mixing fibre into the molten confectionery composition or into the liquid-containing confectionery composition;
shaping the liquid-containing confectionery composition to produce a shaped confectionery composition;
storing the shaped confectionery composition an an elevated temperature of from 40 to 60°C for from 2 to 120 hours; and
setting the liquid-containing confectionery composition,
whereby to produce said temperature tolerant confectionery composition,
wherein the liquid constitutes from 1.0 to 2.0wt% of the liquid-containing confectionery composition;
and wherein the ratio of water to the second liquid component is at least 50wt%: no more than 50wt% second liquid component,
and wherein the second liquid component is proylene glycol.

In a particular embodiment the seeding agent is fibre. The use of propylene glycol and fibre has been found to be particularly beneficial in improving temperature tolerance.

In one series of embodiments, the fibre constitutes from 1 to 40wt%, from 2 to 35wt%, from 5 to 30wt%, from 10 to 25wt% or from 15 to 20wt% of the liquid-containing confectionery composition. In a particular embodiment the fibre constitutes approximately 10wt% of the liquid-containing confectionery composition.

The liquid comprises water (the first liquid component) and the second liquid component. The second liquid component will normally have a FEMA GRAS (generally recognised as safe) designation. The second liquid component is propylene glycol.

Propylene glycol (also called 1,2-propanediol or propane-1,2-diol) is a clear viscous hydrophilic liquid with a boiling point of approximately 188°C and a dielectric constant of 32.1 (20°C).

In one embodiment, the liquid consists of water and propylene glycol.
In one embodiment the liquid consists of water (the first liquid component), the second liquid component and a third (or subsequent) liquid component, said third (or subsequent) liquid component not being water or the second liquid component.
The use of a liquid comprising water and propylene glycol in particular ratios has been found to be particularly beneficial in delivering and dispersing water such that a temperature tolerant composition is achieved. Water and propylene glycol are fully miscible to yield a low viscosity fluid. The inventors propose that the liquid is easily dispersed in the confectionery composition such that small quantities of water are delivered throughout and an extensive sweetener lattice is obtained.

In one series of embodiments, the ratio of water to propylene glycol is at least 55wt% water: no more than 45wt% propylene glycol, at least 60wt% water: no more than 40wt% propylene glycol, at least 65wt% water: no more than 35wt% propylene glycol, at least 70wt% water: no more than 30wt% propylene glycol, at least 75wt% water: no more than 25wt% propylene glycol, at least 80wt% water: no more than 20wt% propylene glycol or at least 85wt% water: no more than 15wt% propylene glycol. A ratio of from 60 to 90wt% water: from 10 to 40wt% propylene glycol is particularly successful.

Products producible by the method are also disclosed.

It will be understood that the confectionery composition may comprise water from a number of sources so the total amount of water and second liquid component constitutes no more than 5wt% of the composition. For example, the composition may be obtained using the method of the first aspect. In such a case, the composition will comprise water that has been added as the first component of the liquid. In addition, water may already have been present in the molten confectionery composition prior to liquid addition e.g. a standard chocolate composition typically comprises about 1wt% water.

The temperature tolerant confectionery composition may be a temperature tolerant chocolate composition.
The composition may comprise less than 4.5wt%, 4.0wt%, 3.5wt%, 3.0wt%, 2.5wt%, 2.0wt% or 1.5wt% (total) water. The composition may comprise at least 1.0wt%, 1.5wt%, 2.0wt% or 2.5wt% (total) water. The composition may comprise from 1.0 to 2.5wt% water.
The composition may comprise less than 1.0wt%, 0.6wt% or 0.4wt%, 0.3wt% or 0.2wt% of the second liquid component. The composition may comprise at least 0.1wt%, 0.2wt% or 0.3wt% of the second liquid component. The composition may comprise from 0.2 to 0.4wt% of the second liquid component.
A temperature tolerant confectionery composition may comprise a bulk sweetener, fat, water and propylene glycol, the bulk sweetener forming a continuous lattice extending through the fat,wherein the water and the propylene glycol together constitute less than 5wt% of the composition and the ratio of water to propylene glycol is at least 50wt% water: no more than 50wt% propylene glycol.
The composition may comprise (total) water and propylene glycol wherein the ratio of water to propylene glycol is at least 55wt% water: no more than 45wt% propylene glycol, at least 60wt% water: no more than 40wt% propylene glycol, at least 65wt% water: no more than 35wt% propylene glycol, at least 70wt% water: no more than 30wt% propylene glycol, at least 75wt% water: no more than 25wt% propylene glycol, at least 80wt% water: no more than 20wt% propylene glycol, at least 85wt% water: no more than 15wt% propylene glycol or at least 90wt% water: no more than 10wt% propylene glycol. Ratios of from 70 to 90wt% water: from 10 to 30wt% propylene glycol or from 75 to 90wt% water: from 10 to 25wt% propylene glycol are particularly successful.

Not related to the present invention there is provided a temperature tolerant chocolate composition comprising a bulk sweetener, fat, water and propylene glycol, wherein the ratio of water to propylene glycol is from 70 to 90wt% water: from 10 to 30wt% propylene glycol.
The ratio of water to propylene glycol may be from 75 to 90wt% water: from 10 to 25wt% propylene glycol or from 80 to 90wt% water: from 10 to 20wt% propylene glycol.
The composition may comprise less than 4.5wt%, 4.0wt%, 3.5wt%, 3.0wt%, 2.5wt%, 2.0wt% or 1.5wt% (total) water. The composition may comprise at least 1.0wt%, 1.5wt%, 2.0wt% or 2.5wt% (total) water. The composition may comprise from 1.0 to 2.5wt% (total) water.
The composition may comprise less than 1.0wt%, 0.6wt%, 0.4wt% or 0.3wt% propylene glycol. The composition may comprise at least 0.1wt%, 0.2wt% or 0.3wt% propylene glycol. The composition may comprise from 0.2 to 0.3wt% propylene glycol.

In certain embodiments, the peak load measured for the composition by a Stable Micro Systems TA.XT+ texture analyser is more than 3000g or more than 4000g under the conditions defined previously.
Suitable bulk sweeteners include sugars (e.g. sucrose, dextrose, glucose, glucose syrup solids, fructose, lactose, maltose or any combination thereof) and sugar alcohols (e.g. erythritol, sorbitol, xylitol, mannitol, lactitol, isomalt, or any combination thereof) and any combination of sugar and sugar alcohol. In certain embodiments the bulk sweetener comprises or consists of sucrose.
The confectionery composition may comprise one or more intense sweeteners in addition to a bulk sweetener. Suitable intense sweeteners include aspartame, acesulfame-k, cyclamates, saccharin, sucralose, neohesperidin, dihydrochalone, alitame, stena sweeteners, glycyrrhizin or any combination thereof.
Suitable fats include cocoa butter, butterfat, cocoa butter replacers (CBR), cocoa butter equivalents (CBE), cocoa butter substitutes (CBS), a vegetable fat that is liquid at standard ambient temperature and pressure (SATP, 25°C and 100kPa) or any combination of the above. In a particular embodiment, the fat comprises cocoa butter.

CBEs are defined in EU Directive 2000/36/EC. Suitable CBEs include illipe, Borneo tallow, tengkawang, palm oil, sal, shea, kokum gurgi and mango kernel. CBE's are usually used in combination with cocoa butter. In one embodiment, the confectionery composition material comprises no more than 5wt% CBE's.

Suitable CBSs include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

Suitable vegetable fats include corn oil, cotton seed oil, rapeseed oil, palm oil, safflower oil, and sunflower oil.

In order to improve the viscosity during processing of the composition, the confectionery composition will commonly comprise at least one emulsifier. Such emulsifiers include lecithin derived from soya bean, safflower, corn, etc, fractionated lecithins enriched with either phosphatidyl choline, phosphatidyl ethanolamine, phosphatidyl inositol; emulsifiers derived from oats, mono- and diglycerides and their tartaric esters, monosodium phosphate derivatives of mono- and diglycerides of edible fats and oils, sorbitan monostearate, polyoxyethylene sorbitan monostearate, hydroxylated lecithin, synthetic phospholipids such as ammonium phosphatides, lactylated fatty acid esters of glycerol and propylene glycol, polyglycerol esters of fatty acids, propylene glycol mono- and diesters of fats and fatty acids. In some embodiments, the emulsifier is selected from soya lecithin, ammonium phosphatides and polyglycerol polyricinoleate.

The confectionery composition may be a chocolate composition such as a milk chocolate, a dark chocolate or a white chocolate. As used herein, a "chocolate composition" is a confectionery composition comprising at least non-fat cocoa solids and/or cocoa butter and optionally CBR (CBE and/or CBS). The term "chocolate composition" should be construed as covering not only chocolate compositions which can be sold as "chocolate" in countries where chocolate is legally defined, but also chocolate compositions which, because of fat, cocoa content etc. may not be legally described as "chocolate" in those countries.

A suitable milk chocolate composition comprises non-fat cocoa solids and milk solids in addition to the bulk sweetener and fat.

A suitable dark chocolate composition comprises non-fat cocoa solids in addition to the bulk sweetener and fat.

A suitable white chocolate composition comprises a bulk sweetener and at least one of cocoa butter/CBE/CBS.

The chocolate composition may be a low-fat chocolate composition, in which case the chocolate composition has a fat content of less than 25wt% or less than 23wt%. The chocolate composition may have a fat content of at least 16wt%, at least 18wt% or at least 20wt%.

Suitable milk solids include cream, full fat milk, skimmed milk and/or whey. The confectionery composition may be prepared from powdered milk solids such as powdered milk/cream or whey powder. Useful sources of whey include whey protein concentrate, whey protein isolate, whey protein hydrolysate or a combination thereof. The whey may be demineralised.

In one embodiment the confectionery composition comprises bulk sweetener, cocoa butter, non-fat cocoa solids and milk solids. In a particular embodiment the confectionery composition comprises 40-70wt% sucrose, 15-30wt% cocoa butter, 2-10wt% non-fat cocoa solids and 10-20wt% milk solids

In an alternative embodiment the confectionery composition comprises 45-55wt% bulk sweetener, 25-30wt% cocoa butter substitute, 10-15wt% demineralised whey, 4-8wt% non-fat cocoa solids and 0-2wt% cocoa butter.

Embodiments of the invention will now be described by way of example only and with reference to the accompanying figures, in which:
Figure 1 is a microscopy image of a chocolate composition comprising propylene glycol, which was treated with chloroform to remove the fat component. The white line on the image indicates a distance of 5µm.
Figure 2 is a microscopy image of a compound chocolate composition comprising propylene glycol, which was treated with chloroform to remove the fat component. The white line on the image indicates a distance of 5µm.
Figure 3 (not according to the invention) is a microscopy image of a compound chocolate composition comprising ethanol, which has been treated with chloroform to remove the fat component. The white line on the image indicates a distance of 10µm.

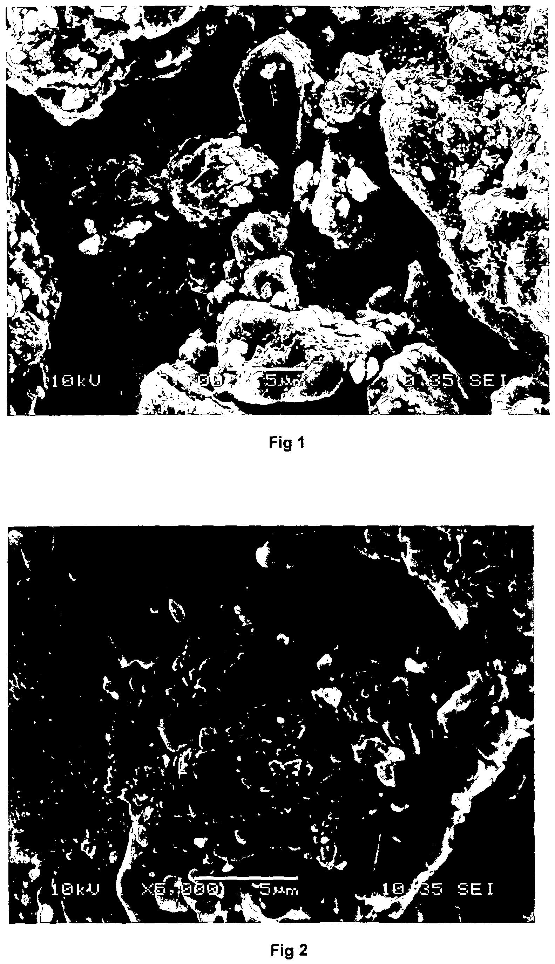

Figures 1 and 2 show images of a chocolate compositions (Examples 2 and 9 respectively, described later), obtained by the addition of a liquid consisting of water (1.0wt%) and propylene glycol (0.3wt%). The compositions were treated with chloroform, which washes out the fat component, leaving behind a powder consisting of proteins, sugars and cocoa fragments. The compositions did not disintegrate upon chloroform treatment indicating that the fat is not responsible for the structure and providing evidence for a continuous matrix formed by sugar crystals.

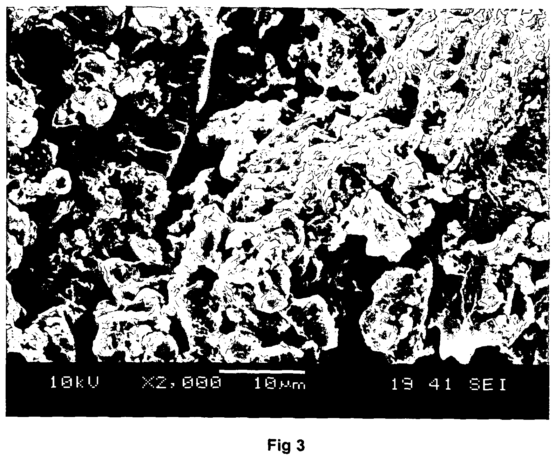

Figure 3 shows an image of compound chocolate composition obtained by the addition of a liquid consisting of ethanol and water (Example 27, described later). The composition was subsequently treated with chloroform, which washes out the fat component, leaving behind a powder consisting of proteins, sugars and cocoa fragments. The composition did not disintegrate upon chloroform treatment, again providing evidence for the existence of a continuous matrix formed by the sugar crystals.

The propylene glycol examples employ the following conventional milk chocolate and compound chocolate recipes as starting materials:

| Compound chocolate | Milk chocolate |
|---|---|
| 50.4wt% sucrose | 23.5wt% cocoa butter |
| 1.0wt% cocoa liquor | 11.5wt% cocoa powder |
| 13.9wt% demineralised whey powder | 19.0wt% skimmed milk powder |
| 6.6wt% cocoa powder | 45.0wt% sucrose |
| 27.3wt% cocoa butter substitute | 1.0wt% emulsifier |
| 0.6wt% emulsifier | |
| 0.2wt% flavours | |

### Examples 1-12: Chocolate compositions obtained by adding water and propylene glycol

Chocolate (standard milk chocolate for Ex 1 to 5 and compound chocolate for Ex 6 to 12) was melted by heating in a hot stove incubator at 50°C. Propylene glycol (PG) was mixed with water and then added to the molten chocolate and the mixture was stirred thoroughly by hand. The combined mass of the chocolate and the liquid was approximately 490g. The mixture containing the water/propylene glycol was poured into a polycarbonate mould and transferred to a refrigerator to cool at 5°C for 30 minutes. The samples were then removed from the mould and stored at ambient temperature.

The samples were analysed by incubating at 40°C for 3 hours followed by immediate testing using a Stable Micro Systems TA.XT+ texture analyser (software version Texture Exponent 32) equipped with a 12.8 mm diameter (bevelled edge) cylindrical probe diameter, with a trigger point of 5 g, penetrating the sample to a depth of 3 mm at a speed of 10 mm/s. The standard milk chocolate (without liquid addition) has a peak load of approximately 40g and the standard compound chocolate (without liquid addition) has a peak load of approximately 25g under these conditions. 5 samples were tested and the mean results are shown in table 1 below together with a moisture (water) analysis. It should be noted that conventional (non-temperature tolerant) chocolate contains some water (ca 1wt%) so the moisture content reflects water from the original recipe as well as the added water.

**Table 1**

| **Example** | **Total liquid added (wt%) water + PG** | **Propylene glycol (wt%)** | **Added water (wt%)** | **Ratio water:PG added** | **Peak Load (g)** | **Final moisture content (w/w%)** | **Ratio water: PG final** |
|---|---|---|---|---|---|---|---|
| 1 | 1.1 | 0.3 | 0.8 | 73:27 | 808 | 1.6 | 84:16 |
| 2 | 1.3 | 0.3 | 1.0 | 77:23 | 2133 | 1.7 | 85:15 |
| 3 | 1.3 | 0.3 | 1.0 | 77:23 | 1631 | 2.1 | 88:12 |
| 4 | 1.3 | 0.3 | 1.0 | 77:23 | 996 | 2.1 | 88:12 |
| 5 | 0.8 | 0.4 | 0.4 | 50:50 | 775 | 1.5 | 79:21 |
| 6 | 0.7 | 0.3 | 0.4 | 57:43 | 107 | 1.2 | 80:20 |
| 7 | 0.9 | 0.3 | 0.6 | 67:33 | 630 | 1.4 | 82:18 |
| 8 | 1.1 | 0.3 | 0.8 | 73:27 | 834 | 1.6 | 84:16 |
| 9 | 1.3 | 0.3 | 1.0 | 77:23 | 1093 | 1.8 | 86:14 |
| 10 | 0.8 | 0.4 | 0.4 | 50:50 | 662 | 1.2 | 75:25 |
| 11 | 2.3 | 0.3 | 2.0 | 87:13 | 1442 | 2.4 | 89:11 |
| 12 | 1.3 | 0.3 | 1.0 | 77:23 | 1231 | 1.8 | 86:14 |

Conventional chocolate (not temperature tolerant) has a peak load value of approximately 5 to 100g under the test conditions. Therefore it can be seen that all of the Examples 1 to 12 are more temperature tolerant than conventional chocolate. All of the examples employ water/propylene glycol with the ratio of water: propylene glycol being at least 50wt% water: no more than 50wt% propylene glycol. Examples 2, 3 and 11 are especially temperature tolerant and each was obtained from a liquid comprising at least 75wt% water: no more than 25wt% propylene glycol.

### Examples 13-21: Chocolate compositions obtained by adding water and propylene glycol with investigation of stoving

As above chocolate (compound chocolate) was melted by heating in a hot stove incubator at 50°C. Propylene glycol (PG) was mixed with water and then added to the molten chocolate and the mixture was stirred thoroughly by hand. The combined mass of the chocolate and the liquid was approximately 490g. The mixture containing the water/propylene glycol was poured into a polycarbonate mould and the effect of stoving was then investigated. The control samples (no stoving) were cooled in a refrigerator for 30 to 35 minutes and then returned to ambient temperature. The stoving samples were stored at 50°C for either two hours or 24 hours, and then transferred to a refrigerator for cooling for 40 to 45 minutes.

### Examples 13-15: Compound chocolate compositions obtained by adding 0.3wt% propylene glycol and 1.5wt% water

**Table 2**

| **Example** | **Total liquid added (wt%) water + PG** | **Propylene glycol (wt%)** | **Added water (wt%)** | **Ratio water: PG added** | **Stoving** | **Peak Load (g)** | **Final moisture content (w/w%)** | **Ratio water: PG final** |
|---|---|---|---|---|---|---|---|---|
| 13 | 1.8 | 0.3 | 1.5 | 83:17 | Control | 1227 | 2.3 | 88:12 |
| 14 | 1.8 | 0.3 | 1.5 | 83:17 | 2 hours stoving | 2354 | 1.9 | 86:14 |
| 15 | 1.8 | 0.3 | 1.5 | 83:17 | 24 hours stoving | 3435 | 1.9 | 86:14 |

Examples 13 to 15 demonstrate the benefit of stoving the compositions. Ex 13 has temperature tolerance as shown by its peak load of 1227g. This temperature tolerance is improved by storage at elevated temperature for 2 hours (Ex 14) and improved even further by storage at elevated temperature for 24 hours (Ex 15). The moisture content of the stoved samples is lower than for the control sample indicating that water has evaporated during stoving. In these examples, the samples were stored in their moulds at elevated temperature.

### Examples 16-18: Compound chocolate compositions obtained by adding 0.3wt% propylene glycol and 1.0wt% water

**Table 3**

| **Example** | **Total liquid added (wt%) water + PG** | **Propylene glycol (wt%)** | **Added water (wt%)** | **Ratio water: PG added** | **Stoving** | **Peak Load (g)** | **Final moisture content (w/w%)** | **Ratio water: PG final** |
|---|---|---|---|---|---|---|---|---|
| 16 | 1.3 | 0.3 | 1.0 | 77:23 | Control | 1231 | 1.8 | 86:14 |
| 17 | 1.3 | 0.3 | 1.0 | 77:23 | 2 hours stoving | 1896 | 1.8 | 86:14 |
| 18 | 1.3 | 0.3 | 1.0 | 77:23 | 24 hours stoving | 4127 | 1.7 | 85:15 |

Examples 16 to 18 demonstrate the benefit of stoving. Ex 16 has temperature tolerance as shown by its peak load of 1231g. This temperature tolerance is improved by storage at elevated temperature (Ex 17 and 18). Example 17 was stored in its mould at elevated temperature whereas Example 18 was cooled in a refrigerator, demoulded and then stored at elevated temperature. Example 18 has a very high peak load and indicates that an initial setting time can be beneficial before subsequent storage at elevated temperature.

### Examples 19-21: Compound chocolate compositions obtained by adding 0.3wt% propylene glycol and 0.8wt% water/impact of stoving temperature

The effect of the stoving temperature was investigated by preparing chocolate compositions comprising water and propylene glycol as described previously, pouring into a polycarbonate mould, stoving for seven hours at 40°C, 50°C or 60°C and then refrigerating for 40-45 minutes. The peak load (as measured previously, ± standard error) and moisture values are given below.

**Table 4**

| **Example** | **Total liquid added (wt%) water + PG** | **Propylene glycol (wt%)** | **Added water (wt%)** | **Ratio water:PG added** | **Stoving temperature** | **Peak Load (g)** | **Final moisture content (w/w%)** | **Ratio water: PG final** |
|---|---|---|---|---|---|---|---|---|
| 19 | 1.1 | 0.3 | 0.8 | 73:27 | 40°C | 1000 (±30) | 1.6 | 84:16 |
| 20 | 1.1 | 0.3 | 0.8 | 73:27 | 50°C | 1900 (±20) | 1.5 | 83:17 |
| 21 | 1.1 | 0.3 | 0.8 | 73:27 | 60°C | 3500 (±100) | 1.5 | 83:17 |

This series of examples demonstrates that stoving is beneficial and that stoving at 60°C is more beneficial than stoving at 50°C which, in turn, is more beneficial than stoving at 40°C.

### Examples 22-23: Compound chocolate compositions obtained by adding 0.3wt% propylene glycol and 0.8wt% water/addition of seeding agent (fibres)

As above chocolate (compound chocolate) was melted by heating in a hot stove incubator at 50°C. 10% seeding agent in the form of dietary fibre (either wheat or potato fibre) was added and thoroughly mixed. Propylene glycol (PG) was mixed with water and then added to the molten chocolate/fibre and the mixture was stirred thoroughly by hand. The mixture containing the fibre and the water/propylene glycol was poured into a polycarbonate mould and transferred to a refrigerator to cool at 5°C for 30 minutes. The results are shown below.

**Table 5**

| **Example** | **Total liquid added (wt%) water + PG** | **Propylene glycol (wt%)** | **Added water (wt%)** | **Ratio water:PG added** | **Seeding agent** | **Peak Load (g)** |
|---|---|---|---|---|---|---|
| 22 | 1.1 | 0.3 | 0.8 | 73:27 | Wheat fibre | 3140 |
| 23 | 1.1 | 0.3 | 0.8 | 73:27 | Potato fibre | 3120 |

Both samples demonstrate excellent temperature tolerance despite being incubated at 40°C for 3 hours.

### Examples 24-25: Compound chocolate compositions obtained by adding 0.3wt% propylene glycol and 1.0wt% water/addition of seeding agent (icing/granulated sugar)

The use of icing sugar (low particle size) and granulated sugar (high particle size) as seeding agents was investigated by replacing 20wt% of the sugar in the standard compound recipe with icing or granulated sugar. A low sugar compound chocolate (comprising 30wt% sugar) was prepared and refined and conched in the usual manner. In Example 24 20wt% icing sugar was added to the low sugar chocolate and an increase in viscosity was observed. Thereafter the water/propylene glycol was added and mixed thoroughly. In Example 25 20wt% granulated sugar was added to the low sugar chocolate and an increase in viscosity was observed, however, the increase was less than for the icing sugar example. In both cases the mixtures were poured into a polycarbonate moulds and transferred to a refrigerator to cool. The results are shown below.

**Table 6**

| **Example** | **Total liquid added (wt%) water + PG** | **Propylene glycol (wt%)** | **Added water (wt%)** | **Ratio water: PG added** | **Seeding agent** | **Peak Load (g)** | **Final moisture content (w/w%)** | **Ratio water:PG final** |
|---|---|---|---|---|---|---|---|---|
| 24 | 1.3 | 0.3 | 1.0 | 77:23 | Icing sugar | 2300 (±35) | 1.6 | 84:16 |
| 25 | 1.3 | 0.3 | 1.0 | 77:23 | Granulated sugar | 1600 (±60) | 1.7 | 85:15 |

Both samples have good temperature tolerance indicating that the addition of seeding agent is beneficial. A particular improvement is seen for icing sugar. The inventors believe that the improvement may be a result of its low particle size and consequent increased surface area to volume ratio. The icing sugar will dissolve more readily than the granulated sugar which may then assist in the subsequent formation of the sweetener lattice.

### Examples 26-27: Chocolate compositions obtained by adding water and ethanol (not according to the invention)

A (compound) chocolate composition was prepared using the following ingredients.

| Ingredient | wt% |
|---|---|
| Sucrose | 50.4 |
| Cocoa liquor | 1.0 |
| Demineralised whey powder | 13.9 |
| Cocoa powder | 6.6 |
| Cocoa butter substitute | 27.3 |
| Emulsifier | 0.6 |
| Flavours | 0.2 |

410g of the chocolate composition was heated on a hot stove to a temperature of 50.1°C (temperature measured using probe). 80g of 96% ethanol (liquid comprising 96wt% ethanol and 4wt% water) was added directly to the chocolate composition whilst stirring vigorously (corresponding to an ethanol addition rate of 16wt%). Mixing was continued to ensure that the ethanol mixed thoroughly with the chocolate.

The chocolate and ethanol mixture was transferred to several 50g moulds which had been heated to 40°C. The chocolate filled moulds were placed in a refrigerator to cool for approximately 30 minutes. After cooling, the chocolate bars were removed from the moulds and transferred to an incubator at a temperature of 40°C for 3 days to allow the ethanol to evaporate.

The temperature tolerance of the chocolate compositions with ethanol (Example 26) and those without ethanol (Comparative Example 1) were tested by placing samples in Petri dishes and incubating at 40°C for three hours.

The Comparative Example 1 samples (without ethanol) collapsed to form a pool of chocolate and could not be tested further, thereby demonstrating that they were not temperature tolerant.

The Example 26 samples (with ethanol) remained solid throughout the incubation and were subsequently analysed using a Stable Micro Systems TA.XT+ texture analyser (software version Texture Exponent 32) equipped with a 12.8 mm diameter (bevelled edge) cylindrical probe diameter, with a trigger point of 5 g, penetrating the sample to a depth of 3 mm at a speed of 10 mm/s. 5 samples were tested and the mean result was a peak load of 5491g with a standard deviation of 1479g.

The example was repeated with 9wt% of 96% ethanol to yield example 27. After setting, individual units were incubated at 50°C for a period of 5 days to evaporate off ethanol. The resulting chocolate was temperature tolerant.

In alternative embodiments the ethanol added to the 410g chocolate composition can be 60g, 40g or 20g.

**Further example formulations**

| Recipe 1 | Recipe 2 | Recipe 3 |
|---|---|---|
| 13.3wt% cocoa liquor | 12.0 cocoa liquor | 23.5wt% cocoa butter |
| 13.1wt% cocoa butter | 12.6 cocoa butter | 11.5wt% cocoa powder |
| 3.5wt% milk fat | 4.5wt% butter fat | 19.0wt% skimmed milk powder |
| 14.0wt% skimmed milk powder | 23.0wt% skimmed milk powder | 45.0wt% sucrose |
| 24.8wt% erythritol | 47.6wt% erythritol | 1.0wt% emulsifier |
| 8.8wt% polydextrose | 0.3wt% emulsifier | |
| 8.5wt% maltitol | | |
| 6.3wt% maltodextrin | | |
| 6.3wt% whey protein isolate | | |
| 1.4wt% emulsifier | | |

Ethanol can be added to the recipes in the following amounts: A (18wt%), B (12wt%), C (8wt%) or D (4wt%) to give compositions 1A to 1 D, 2A to 2D and 3A to 3D. Ethanol-water mixtures can be added to the recipes at an amount of 16wt% in the following ethanol-water ratios: 9:1 (E), 4:1 (F), 7:3 (G) to give compositions 1 E to 1G, 2E to 2G and 3E to 3G.

## Claims

1. A method for producing a temperature tolerant confectionery composition comprising:-
mixing a liquid comprising water as a first liquid component and a second liquid component into a molten confectionery composition comprising a bulk sweetener and fat to obtain a liquid-containing confectionery composition;
shaping the liquid-containing confectionery composition to produce a shaped confectionery composition;
storing the shaped confectionery composition at an elevated temperature of from 40 to 60°C for from 2 to 120 hours; and
setting the liquid-containing confectionery composition,
whereby to produce said temperature tolerant confectionery composition,
wherein the liquid constitutes from 1.0 to 2.0wt% of the liquid-containing confectionery composition;
and wherein the ratio of water to the second liquid component is at least 50wt%: no more than 50wt% second liquid component,
and wherein the second liquid component is propylene glycol.

2. The method of claim 1, wherein the shaped confectionery composition is stored at reduced pressure.

3. The method of claim 1 or 2, wherein the shaped confectionery composition is stored at reduced temperature prior to being stored at elevated temperature.

4. The method of any one of the preceding claims, comprising an additional step of dissolving bulk sweetener in the liquid prior to mixing with the molten confectionery composition and/or an additional step of mixing a seeding agent into the molten confectionery composition or the liquid-containing confectionery composition.

5. The method of claim 4, wherein the seeding agent, when present, is icing sugar, granulated sugar or fibre.

6. The method of any one of the preceding claims, wherein the ratio of the water to the second component is at least 75wt% water: no more than 25wt% second liquid component.

7. The method of any one of the preceding claims, wherein the temperature tolerant confectionery composition is a temperature tolerant chocolate composition.

8. The method of any one of the preceding claims, wherein the temperature tolerant composition has a peak load of more than 1000g as measured by a Stable Micro Systems TA.XT+ texture analyser.

## Patentansprüche

1. Verfahren zur Herstellung einer temperaturtoleranten Konfektzusammensetzung umfassend:
das Mischen einer Flüssigkeit, die Wasser als erste flüssige Komponente und zweite flüssige Komponente umfasst, in eine geschmolzene Konfektzusammensetzung, die einen Füllsüßstoff und Fett umfasst, um eine Flüssigkeit enthaltende Konfektzusammensetzung zu erhalten;
das Gestalten der Flüssigkeit enthaltenden Konfektzusammensetzung, um eine gestaltete Konfektzusammensetzung herzustellen,
das Lagern der gestalteten Konfektzusammensetzung bei erhöhter Temperatur von 40 bis 60 °C 2 bis 120 Stunden lang; und
das Erstarrenlassen der Flüssigkeit enthaltenden Konfektzusammensetzung,
wobei die temperaturtolerante Konfektzusammensetzung hergestellt wird,
wobei die Flüssigkeit 1,0 bis 2,0 Gew.-% der Flüssigkeit enthaltenden Konfektzusammensetzung bildet;
und wobei das Verhältnis von Wasser zu der zweiten flüssigen Komponente mindestens 50 Gew.-% : nicht mehr als 50 Gew.-% der zweiten flüssigen Komponente beträgt,
und wobei die zweite flüssige Komponente Propylenglycol ist.

2. Verfahren nach Anspruch 1, wobei die gestaltete Konfektzusammensetzung unter reduziertem Druck gelagert wird.

3. Verfahren nach Anspruch 1 oder 2, wobei die gestaltete Konfektzusammensetzung bei reduzierter Temperatur gelagert wird, bevor sie bei erhöhter Temperatur gelagert wird.

4. Verfahren nach einem der vorhergehenden Ansprüche, umfassend einen zusätzlichen Schritt des Lösens von Füllsüßstoff in der Flüssigkeit vor dem Mischen mit der geschmolzenen Konfektzusammensetzung und/oder einen zusätzlichen Schritt des Mischens eines Impfmittels in die geschmolzene Konfektzusammensetzung oder die Flüssigkeit enthaltende Konfektzusammensetzung.

5. Verfahren nach Anspruch 4, wobei das Impfmittel, falls vorhanden, Staubzucker, Kristallzucker oder Faser ist.

6. Verfahren nach einem der vorhergehenden Ansprüche, wobei das Verhältnis des Wassers zu der zweiten Komponente mindestens 75 Gew.-% Wasser : nicht mehr als 25 Gew.-% zweiter flüssiger Komponente beträgt.

7. Verfahren nach einem der vorhergehenden Ansprüche, wobei die temperaturtolerante Konfektzusammensetzung eine temperaturtolerante Schokoladezusammensetzung ist.

8. Verfahren nach einem der vorhergehenden Ansprüche, wobei die temperaturtolerante Zusammensetzung eine Spitzenbelastung von mehr als 1000 g, wie durch einen Stable Micro System^{TA.XT+} -Strukturanalysator gemessen, aufweist.

## Revendications

1. Procédé de production d'une composition de confiserie tolérant la température comprenant:
le mélange d'un liquide comprenant de l'eau comme premier composant liquide et un second composant liquide dans une composition de confiserie fondue comprenant un édulcorant de charge et de la graisse pour obtenir une composition de confiserie contenant un liquide;
la mise en forme de la composition de confiserie contenant un liquide pour produire une composition de confiserie mise en forme;
le stockage de la composition de confiserie mise en forme à une température élevée de 40 à 60°C durant 2 à 120 heures; et
le repos de la composition de confiserie contenant un liquide,
afin de produire ladite composition de confiserie tolérant la température,
où le liquide constitue de 1,0 à 2,0 % en pds de la composition de confiserie contenant un liquide;
et où le rapport de l'eau au second composant liquide est d'au moins 50 % en pds: pas plus de 50 % en pds du second composant liquide,
et où le second composant liquide est le propylène glycol.

2. Procédé selon la revendication 1, dans lequel la composition de confiserie mise en forme est stockée sous une pression réduite.

3. Procédé selon la revendication 1 ou 2, dans lequel la composition de confiserie mise en forme est stockée à température réduite avant d'être stockée à température élevée.

4. Procédé selon l'une quelconque des revendications précédentes, comprenant une étape additionnelle de dissolution d'édulcorant de charge dans le liquide avant le mélange avec la composition de confiserie fondue et/ou l'étape additionnelle de mélange d'un agent d'ensemencement dans la composition de confiserie fondue ou la composition de confiserie contenant un liquide.

5. Procédé selon la revendication 4, dans lequel l'agent d'ensemencement, lorsqu'il est présent, est du sucre glace, du sucre granulé ou une fibre.

6. Procédé selon l'une quelconque des revendications précédentes, dans lequel le rapport de l'eau au second composant est d'au moins 75 % en pds d'eau: pas plus de 25 % en pds du second composant liquide.

7. Procédé selon l'une quelconque des revendications précédentes, dans lequel la composition de confiserie tolérant la température est une composition de chocolat tolérant la température.

8. Procédé selon l'une quelconque des revendications précédentes, dans lequel la composition tolérant la température présente une charge pic de plus de 1 000 g telle que mesurée par l'intermédiaire d'un appareil d'analyse de texture Stable Micro Systems TA.XT+.
